# EUROPEAN PATENT APPLICATION

(11) **EP 1 453 317 A2**
(43) Date of publication of application: **01.09.2004**
(21) Application number: 03300120.7
(22) Date of filing: 18.09.2003
(51) Int. Cl.: H04N 7/173

(54) **Multiple view video feed**

(30) Priority: 20.09.2002 US 251308
(71) Applicant: Alcatel Canada Inc., Kanata, Ontario K2K 2E6 (CA)
(72) Inventor: Parker, Alistair, Quispamsis New Brunswick E2E 4H9 (CA)
(74) Representative: Feray, Valérie

(57) **Abstract**

Systems and devices for providing multiple video signals simultaneously to an end user. Multiple video tuners are each tuned to a different video signal at a content provider's location. The output of each tuner is then received by a video multiplexer which multiplexes the disparate video signals into a single composite video signal. The resulting composite video signal, which presents the different video signals in a grid pattern with each sector in the grid phoning a different video signal, is then provided with a suitable user interface. The user interface provides such information such as the source of each of the video signals and allows an end user to navigate between the different video signals. The resulting composite video signal with its user interface, is then encoded and transmitted to an end user device by way of a network. An end user, using the end user device, can therefore simultaneously view multiple video signals without the need for switching channels.

## Description

The present invention relates to video broadcasts and is especially applicable but not limited to systems and devices for simultaneously presenting multiple video images to an end user.

The recent proliferation of available television channels has led to the exacerbation of an already annoying situation. Television viewers must increasingly switch channels to determine not only what programs are on but also to determine what events have transpired on simultaneous programs they wish to watch. This second problem is even more acute for sports fans who wish to watch two or even three simultaneous sporting events on a single television. Television equipped with dual tuners and a picture-in-picture feature can, at most, keep track of two channels simultaneously.

As noted above, other viewers must constantly switch channels to find out what programs are on. While some viewers may use a program guide for this purpose, others wish to see what programs are currently playing as opposed to reading about it. This phenomenon has given rise to the practice known as "channel surfing" where viewers continuously cycle through the available channels in an attempt to find something to watch.

Based on the above, there is therefore a need for a visual or video means of viewing multiple channels at once. Not only would such a solution alleviate the aggravation of the channel-flipping sports fans, it would also allow those channel surfers to minimize their practice. Ideally such a solution should not require any modification to existing television sets. Also, such a solution should be usable on most, if not all existing television sets.

It is therefore one object of the present invention to at least mitigate, if not overcome, the disadvantages of the prior art by providing a system for presenting multiple video signals to an end user, said system alleviating the aggravation of the channel-flipping sports fans, allowing the channel surfers to minimize their practice, not requiring any modification to existing television sets and being usable on most, if not all existing television sets.

More precisely, the present invention provides a system for presenting multiple video signals to an end user through a network connection, the system comprising:
- a plurality of video signal reception devices, each device being set to receive a different video signal;
- a video multiplexer receiving an output from each of said video signal reception devices, said multiplexer multiplexing together each output to produce a single composite video signal, said single composite video signal having multiple sections with each section having a video image from one of said plurality of video signal reception devices; and
- an encoder device receiving said single video signal, said encoder device encoding said single composite video signal into a network signal suitable for use with a network.

Thus, the present invention provides a system for providing multiple video signals simultaneously to an end user. Multiple video signal reception devices such as tuners are each tuned to a different video signal at a content provider's location. The output of each tuner is then received by a video multiplexer which multiplexes the disparate video signals into a single composite video signal. The resulting composite video signal, which presents the different video signals in a grid pattern with each sector in the grid framing a different video signal, is then used with a suitable user interface. The user interface provides such information such as the source of each of the video signals and allows an end user to navigate between the different video signals. The resulting composite video signal and the user interface, is received by an end user device by way of a network. An end user, using the end user device, can therefore simultaneously view multiple video signals without the need for switching channels.

In a second aspect, the present invention provides a user interface for use in simultaneously viewing multiple video signals, the user interface comprising:
- a plurality of panels, each panel containing a video image from one of said multiple video signals; and
- a plurality of text indicia, each of said text indicia being related to a specific one of said plurality of panels.
   In a third aspect, the present invention provides a television signal for use with a television with a screen, said signal having encoded thereon
- a plurality of video images, each of said images being provided with a separate section of said screen;
- a user interface having multiple panels, each panel being occupied by one of said plurality of video images; and
- a plurality of text indicia, each of said text indicia being related to a specific one of said multiple panels.

In a fourth aspect, the present invention provides a pair of signals for use by an end user device, said pair comprising:
- a composite video signal having encoded thereon multiple video signals with each video signal having a video image from one of a plurality of video signal reception devices; and
- a user interface signal for use with said composite video signal, said user interface signal having encoded thereon a user interface for use in simultaneously viewing said multiple video signals.

A better understanding of the invention will be obtained by considering the detailed description below, with reference to the following drawings in which:
Figure 1 is a block diagram of a system for aggregating multiple video signals according to the invention;
Figure 2 is a sample user interface for viewing the multiple video signals; and
Figure 2A is an alternative configuration of the user interface illustrated in Fig 2

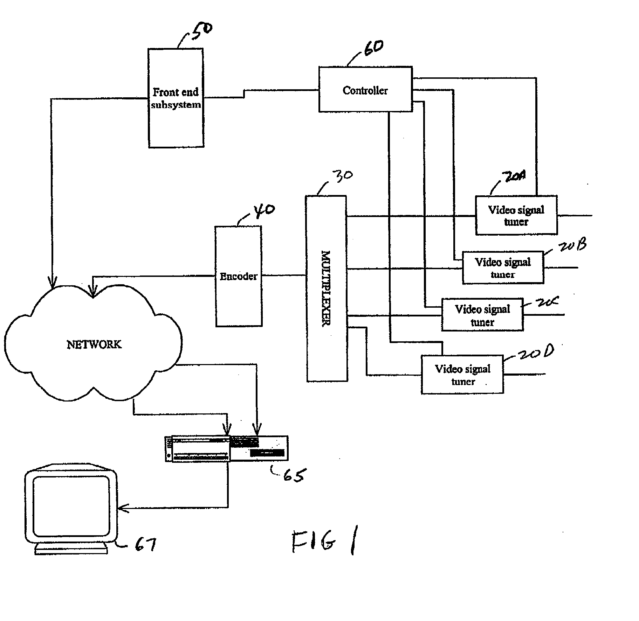

Referring to Figure 1, a block diagram of a system 10 according to the invention is illustrated. Multiple video signal devices 20A-20D are provided along with a video multiplexer 30 and a network encoder 40. Also included is a front end subsystem 50 and a controller subsystem 60. Each one of the devices 20A-20D is tuned to receive a different video feed. The output of each of these devices is received by the video multiplexer 30. The video multiplexer 30 aggregates the video signals into a composite video signal. The composite video signal is then encoded by the network encoder 40 and transmitted to an end user device. The controller 60 provides a user interface (UI) by way of the front end subsystem 50. The controller 60 also controls the tuning of each of the devices 20A-20D. The UI is transmitted to a end user device 65 at the other end of the network. At this end, the UI and the composite signal are aggregated into a single signal and presented to an end user as a single image. This single image may then be presented to the end user as an option or as another channel on a television 61.

In terms of the details, the video signal devices 20A-20D may be video tuners or, preferably, set top boxes (STB) receiving a feed from a suitable content provider. Each of the devices 20A-20D can then be independently tuned to a different channel so that the composite video signal from the video multiplexer 30 provides simultaneous views of the different channels to which the devices 20A-20D are tuned.

The front end subsystem 50 can be a suitable video processing device which can provide a user interface (UI) to the composite video signal. The UI may be an HTML (Hypertext Markup Language) frame which provides a suitable background to the different video images and also provides a suitable frame to each image. Since the front-end subsystem 50 is controlled by the controller 60 which controls the tuning of each of the devices 20A-20D, the front end subsystem 50 is aware of which channel each device 20A-20D is tuned to. The UI may therefore also provide the channel and the program presented by the composite video signal. This can be done by coupling the front end subsystem's programming with a database of programs, channels, and time slots for the programs. Thus, once the front-end subsystem is aware of which channel device 20A is tuned and of the current time slot, the front-end subsystem 50 can then query the database about which program is currently being shown on that channel. Once this information is available, the front-end subsystem may then include a suitable caption underneath the relevant video image in the composite video signal. Of course, each device 20A-20D is assigned a specific sector in the grid-like presentation of the composite video signal.

The encoder 40, which receives the composite signal from the multiplexer 30 encodes this composite signal into a format suitable with a distribution network. Depending on the type of network used (e.g. wireless, cable, Internet-based), the encoder 40 may be different. Widely available types of encoders may be used for this purpose. This encoder 40 is coupled to the network and is also used as a network connection device for transmitting the encoded resulting signal through the network.

The video multiplexer 30 may be any commercially available video multiplexer which can receive multiple video signals and output a gridded composite video signal composed of the input video signals. Video multiplexers such as those used in the surveillance camera industry or in the video security industry may be suitable for this purpose. Preferably, the video multiplexer is able to multiplex and output color and substantially full motion video signals.

The controller 60 can be any suitable server device which may be controlled by an administrator 60A and which can tune each of the devices 20A-20D separately. The controller 60 is also able to communicate with the front end subsystem 50 to automatically make changes to the UI. Such changes allow for the customization of the UI for each end user device - each end user device may be provided with a different UI as dictated by the controller 60.

As a refinement to the system 10, the controller 60 may be able to receive input from end user devices. Such input, perhaps in the form of notes, may be taken into consideration when determining which video stream are to be provided to the multiplexer 30. As an example, viewers may note to determine which channels are to be included in the composite video signal.

At the other end of the network, the end user device separately receives the UI signal and the composite video signal. The end user device then combines these two into a combined signal which may be used by a conventional television console. This may be done by overlaying the UI over the composite video signal. Since the UI is, in one embodiment, an HTML web page with specific areas left blank or see-through, judicious placement or positioning will allow the relevant sections of the composite video signal to be visible to the end user.

It should be noted that the controller 60 is not required for a basis system. The front end subsystem 50 can provide the UI to the composite signal coming from the encoder 40 and the devices 20A-20D will provide the video signals.

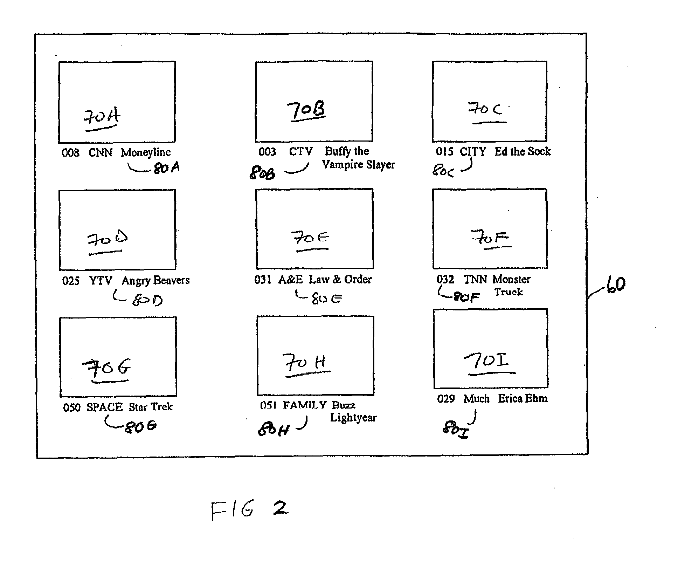

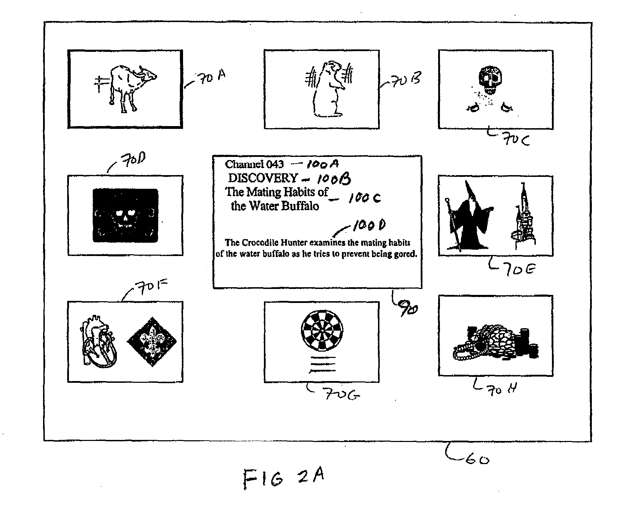

Referring to Figure 2, a sample output of a combined signal with the UI is presented. The screen 60 (preferably a television screen) has panels 70A-70I each of which presents a video signal from a separate channel. Underneath each panel is text indicia 80A-80I relating to the video image in the panel 70A-70I. This text indicia may be the channel number of the channel in the video panel 70A-70I, the network identification for that channel (e.g. CNN, CBS, etc.), and the name of the program currently playing. It should be noted that the combined signal with the UI is produced by a suitable end user device from the UI signal and the composite video signal. This combined signal can be viewed using conventional means. Thus, in one embodiment, the combined signal is a television signal which may be used with a conventional television console.

To render the UI in Figure 2 interactive, the end user is able to highlight the different panels 70A-70I and to activate the highlighted selection. Activation of a panel causes the end user device to change channels to the channel featured by the highlighted panel. This can be implemented by providing "tags" for each of the panels in the UI. Since the front-end subsystem 50 is aware of which channel is in which panel, each panel is provided with a tag through the HTML UI. When a panel is activated, the end user device which the end user is using consults the tag of the highlighted panel. Since the tag contains the channel presented in the highlighted panel, activation of the panel causes the switching of channels to that presented by the panel. As an example, if the end user highlights panel 70E, the end user device, by consulting the tag for that channel, knows that panel provides a view of channel 031. Activation of the panel 70E thereby causes the end user device to tune to channel 031.

Referring to Figure 2A, an alternative sample output of a combined signal with the UI is presented. Screen 60 still has panels 70A-70H but, for this embodiment, a central panel 90. Each of the panels 70A-70H still presents a different video signal from a separate channel but the information for each channel must be accessed separately. Through the HTML UI, the end user can highlight one of the panels (panel 70A s highlighted in Figure 2A) and the information regarding the video in the highlighted panel is shown in the central panel 90. As can be seen, this information may include the channel number 100A, the channel identifier 100B, the program name 100C, and a synopsis 100D of the program. Through the use of the "tag" concept explained above, the highlighted panel may be activated, thereby causing the switching of channels to that presented by the panel. The movement of a cursor/highlight and the presentation of the UI and of the channel information may be accomplished by using a continuously running Javascript application which not only handles user input but the UI as well. This technique may be used for the UI in Figure 2 as well.

As yet another alternative, activation of a panel may provide the end user with more complete information regarding the video in the activated panel. This option will not cause the switching of channels but merely the presentation of the video in the panel along with more information such as user feedback, history of the program, and other information not presentable in the central panel.

It should be clear that the combined signal produced by an end user device from the UI signal and the composite video signal is presented to the end user as a separate interactive channel. It should further be clear that such aggregation of channels may be used to aggregate certain types of channels. As an example, a content or cable provider may provide multiple "specialty" channels each of which provides multiple views of specific types of channels. A "Sports Mosaic" channel could present 9 channels all of which are broadcasting sporting events while a "Thriller Mosaic" channel could present channels that are showing mysteries, crime drama programs, or mystery movies. This grouping of channels or programs that conform to a specific theme can simplify and enhance an end user's television viewing experience. It should be noted that the decision as to which channels are to be included in the aggregation is to be made at the content provider location -- end users merely receive a pre-packaged interactive channel. However, as noted above, provision may be made which allows end users to note for which channels to include in the aggregation. The voting and tallying of votes, along with the tuning of the devices 20A-20D, are to be handled by the controller 60.

A person understanding this invention may now conceive of alternative structures and embodiments or variations of the above all of which are intended to fall within the scope of the invention as defined in the claims that follow.

## Claims

1. System for presenting multiple video signals to an end user through a network connection, the system comprising:
- a plurality of video signal reception devices, each device being set to receive a different video signal;
- a video multiplexer receiving an output from each of said video signal reception devices, said multiplexer multiplexing together each output to produce a single composite video signal, said single composite video signal having multiple sections with each section having a video image fro m one of said plurality of video signal reception devices; and
- an encoder device receiving said single video signal, said encoder device encoding said single composite video signal into a network signal suitable for use with a network.

2. System according to claim 1 further including a front end subsystem for providing a user interface to be used with said composite video signal.

3. System according to claim 1 or claim 2 further including a controller for controlling each one of said plurality of video signal reception devices.

4. System according to any one of claims 1 to 3 wherein at least one of said video signal reception devices is a tuner for receiving television channels.

5. System according to any one of claims 1 to 4 wherein at least one of said video signal reception devices is a set top box.

6. System according to any one of claims 2 to 5 wherein said user interface comprises a plurality of separate panels, each separate panel showing a video image from one of said plurality of video signal reception devices.

7. System according to claim 6 wherein said user interface further includes text indicia for each of said plurality panels

8. System according to claim 7 wherein for each separate panel, said text indicia comprises information regarding said video image in said separate panel.

9. User interface for use in simultaneously viewing multiple video signals, the user interface comprising:
- a plurality of panels, each panel containing a video image from one of said multiple video signals; and
- a plurality of text indicia, at least one of said text indicia being related to a specific one of said plurality of panels.

10. User interface according to claim 9 wherein each one of said multiple video signals is a video signal from a television station.

11. User interface according to claim 9 or claim 10 wherein, for each of said plurality of panels, at least one of said text indicia indicates a television channel being shown on said panel.

12. User interface according to any one of claims 9 to 11 wherein, for each of said plurality of panels, at least one of said text indicia indicates a television program being shown on said panel.

13. User interface according to any one of claims 9 to 12 wherein, for each of said plurality of panels, at least one of said text indicia indicates a television network that is a source of said video image being shown on said panel.

14. User interface according b any one of claims 11 to 13 wherein activation of a panel causes an end user device to tune to the television channel being shown on said panel.

15. Television signal for use with a television with a screen, said signal having encoded thereon
- a plural ity of video images, each of said images being provided with a separate section of said screen;
- a user interface having multiple panels, each panel being occupied by one of said plurality of video images; and
- a plurality of text indicia, at least one of said text indicia being related to a specific one of said multiple panels.

16. Television signal according to claim 15 wherein each of said video images originates from a different television network.

17. Television signal according to claim 15 or claim 16 wherein for each one of said multiple panels, at least one of said text indicia indicates a television channel being shown on said panel.

18. Television signal according to any one of claims 15 to 17 wherein, for each one of said multiple panels, at least one of said text indicia indicates a television program being shown on said panel.

19. Television signal according to any one of claims 16 to 18 wherein, for each one of said multiple panels, at least one of said text indicia indicates a television network that is a source of said video image being shown on said panel.

20. Television signal according to any one of claims 16 to 19 wherein each one of said plurality of video images is an image of a specific television program being broadcast by a television network.

21. Television signal according to claim 20 wherein each specific television program conforms to a specific predetermined theme.

22. Pair of signals for use by an end user device, said pair comprising:
- a composite video signal having encoded thereon multiple video signals with each video signal having a video image from one of a plurality of video signal reception devices; and
- a user interface signal for use with said composite video signal, said user interface signal having encoded thereon a user interface for use in simultaneously viewing said multiple video signals.

23. Pair of signals according to claim 22 wherein said user interface comprises:
- a plurality of panels, each panel containing a video image from one of said multiple video signals; and
- a plurality of text indicia, at least one of said text indicia being related to a specific one of said plurality of panels.

24. Pair of signals according to claim 22 or claim 23 wherein said composite video signal is produced by a system comprising:
- a plurality of video signal reception devices, each device being set to receive a different video signal;
- a video multiplexer receiving an output from each of said video signal reception devices, said multiplexer multiplexing together each output to produce a single composite video signal, said single composite video signal having multiple sections with each section having a video image from one of said plurality of video signal reception devices; and
- an encoder device receiving said single video signal, said encoder device encoding said single composite video signal into a network signal suitable for use with a network.

25. Pair of signals according to any one of claims 22 to 24 wherein said pair of signals are transmitted to said end user device through a network.
